# EUROPEAN PATENT APPLICATION

(11) **EP 1 870 380 A1**
(43) Date of publication of application: **26.12.2007**
(21) Application number: 06425421.2
(22) Date of filing: 20.06.2006
(51) Int. Cl.: C02F 1/52, C02F 1/28, C02F 103/20, C02F 103/22, C02F 103/24, C02F 103/32, C02F 101/30

(54) **Water treatment with clay and polyelectrolyte**

(71) Applicant: Ferca S.r.l., 20020 Lainate MI (IT)
(72) Inventor: Modica, Giovanni, 20131 Milano (IT); Buccino, Luciano, 16039 Sestri Levante (IT); Merlini, Sergio, 20154 Milano (IT)
(74) Representative: Alagem Modiano, Lara S.

(57) **Abstract**

A method adapted for the disposal of wastewater originating from processes or treatments of products of the agroalimentary industry, in particular vegetable water originating from the processing of olive oil. The method uses substantially a synergistic composition of at least one clay and at least one polyelectrolyte. By placing this composition in contact with the wastewater, one obtains the coagulation-flocculation of the wastewater and the consequent precipitation of all suspended solids, both macroscopic ones and colloidal- and mycellar-sized ones. The method allows to coagulate the wastewater, making it adapted for subsequent molecular filtration operations. In one embodiment, the method allows to separate the wastewater into a solid component, into clean water and into a highly concentrated aqueous solution, all products which can be reused in the industrial chain as recycled raw materials. An apparatus for performing the method cited above and the synergistic composition of at least one clay and at least one polyelectrolyte to be used in the above method are also described.

## Description

The present invention relates to a method, to an apparatus for performing the method, and to a synergistic composition to be used in the method, for the disposal of aqueous wastewater originating from the agroalimentary industry, particularly vegetable water originating from the production of olive oil.

Many industrial methods for processing or treating food products (particularly oil products, wine products, horticultural products, dairy products, and food products in general) lead to the formation of aqueous waste, the disposal whereof is, however, rendered problematic by the simultaneous presence of a substantial organic load in solution combined with a significant quantity of suspended solids. A typical example of agroalimentary wastewater is the vegetable water (hereinafter VW) of olives, which together with olive residue are the byproducts of the olive oil extraction process.

The permanence in suspension of these solids is usually due to several factors. For example, if the size of the solids would suggest to expect their precipitation, this phenomenon can be prevented by the presence, on their surface, of charges of the same sign which, due to Coulomb repulsion, prevent sedimentation. In other cases (for example, colloids and micellar substances), the high chemical and physical affinity (polarity) with water molecules traps the solids in a structure which prevents their spontaneous sedimentation in an acceptable time. In other cases, the solids do not precipitate substantially due to their excessively small dimensions or to the unfavorable ratio between dimensions and density.

In the conventional methods for disposal of wastewater mentioned above, the first step regularly entails separating the suspended solid component, since it hinders the execution of subsequent molecular filtration steps for example by ultrafiltration or reverse osmosis, the membranes whereof would otherwise be clogged rapidly.

The method conventionally used to eliminate suspended solids is coagulation-flocculation by using substances such as salts of iron, magnesium or aluminum, optionally combined with other precipitation agents. However, these substances suffer drawbacks which make them scarcely or not at all suitable to be applied to agroalimentary wastewater, since for example their toxicity prevents the commercial or industrial reuse of the liquid and solid components into which the wastewater has separated. Other common drawbacks are poor efficiency in the elimination of small solids; formation of persistent and permanent coloring of the cleaned aqueous phase; formation, together with the natural substances that are present in agroalimentary wastewater, of thick tars, which are difficult to separate from the aqueous component; production of an uncontrolled coagulation-flocculation with simultaneous coprecipitation by entrainment also of valuable organic substances, which are not suspended but are in solution. The permanence of these solutes in the liquid phase and their subsequent selective recovery is often desirable in terms of reuse in industrial processes.

Currently, therefore, there are no available methods for coagulation-flocculation that are non-toxic, optimum, efficient and economically attractive and do not suffer the drawbacks of the background art. Therefore, the tendency is to dispose of waste as it is, simply reducing its organic polluting load (both in suspension and in solution) to within the legal limits for spreading in agricultural use, in a landfill or in surface water. However, it is now well-known that the discharge of agroalimentary wastewater into waterways or on soils entails, in the long term, contamination of the water table.

According to the statutory provisions applicable in Italy, ground spreading of, for example, VW should have been only a transient phase while waiting for the adoption of more efficient disposal systems that entail less risk for the environment. To be successful as a fertilizer, ground spreading of VW in fact must be performed in an extremely controlled manner, since it is necessary to follow methods that take into account the spreading doses, the type of VW, the characteristics of the soil, the crop that is present, the position and nature of the water table, the climate conditions and the irrigation conditions. Moreover, despite the adoption of all these refinements, ground spreading of oil-derived wastewater has led to highly diverse and often mutually contradictory responses. Finally, as regards the necessary pretreatment for detoxifying the organic load, it must be considered that oil mills generally have very different sizes and are often located in mutually distant rural areas; therefore, it is easily understandable that connecting the drains of oil mills in a single main drain for sending to a cooperative processing plant is generally an impractical solution in terms of feasibility and costs. In view of all this, the illegal spreading of VW, often not purified and therefore still burdened with pollutants, is still a widespread solution, with consequent irreversible contamination of soils and water tables.

The aim of the present invention is therefore to provide a method for the disposal of wastewater from the processing and/or treatment of agroalimentary products, particularly agroalimentary wastewater from the industry of oil products, wine products, horticultural products, dairy products, which overcomes the drawbacks of the background art.

An object is to provide a method as described above that is economically convenient and allows coagulation-flocculation of wastewater, without leaving residues that are toxic or difficult to eliminate, without coloring the separated liquid phase, keeping in solution the valuable organic molecules that are present initially, in order to allow their subsequent recovery.

Another object is to provide a method as described above which allows to obtain solid and liquid products of high purity and having chemical and physical features that allow their reuse in the industrial chain as recycled raw materials, with the consequent economic advantages.

Another object is to provide an apparatus for performing the method defined above.

Another object is to provide a coagulation-flocculation composition and its corresponding use in the context of the method defined above.

This aim and these and other objects are achieved by a method for disposal of at least one industrial wastewater derived from the processing and/or treatment of agroalimentary products, preferably selected among oil products, wine products, horticultural products, dairy products, and food products in general, more preferably oil products, even more preferably vegetable waters, said method comprising the step of placing said at least one wastewater in contact with a composition which comprises at least one clay and at least one polyelectrolyte, so as to trigger coagulation-flocculation of the solids suspended in said at least one wastewater and form a solid component and a liquid component.

The aim and objects of the invention are also achieved by an apparatus for performing the method described above.

The aim and objects of the invention are also achieved by a composition particularly for triggering coagulation-flocculation of solid substances suspended in at least one industrial wastewater produced by the processing and/or treatment of agroalimentary products, said composition comprising at least one clay and at least one polyelectrolyte.

The aim and objects of the invention are also achieved by the use of a composition as defined above to trigger coagulation-flocculation of solids suspended in an industrial wastewater derived from the processing and/or treatment of agroalimentary products, preferably one or more among oil products, wine products, horticultural products, dairy products, more preferably oil products, even more preferably vegetable water.

It is understood that any characteristic that is mentioned with reference to only one of the aspects of the invention but can be referred also to other aspects is to be considered equally valid as regards said other aspects even though it is not repeated explicitly.

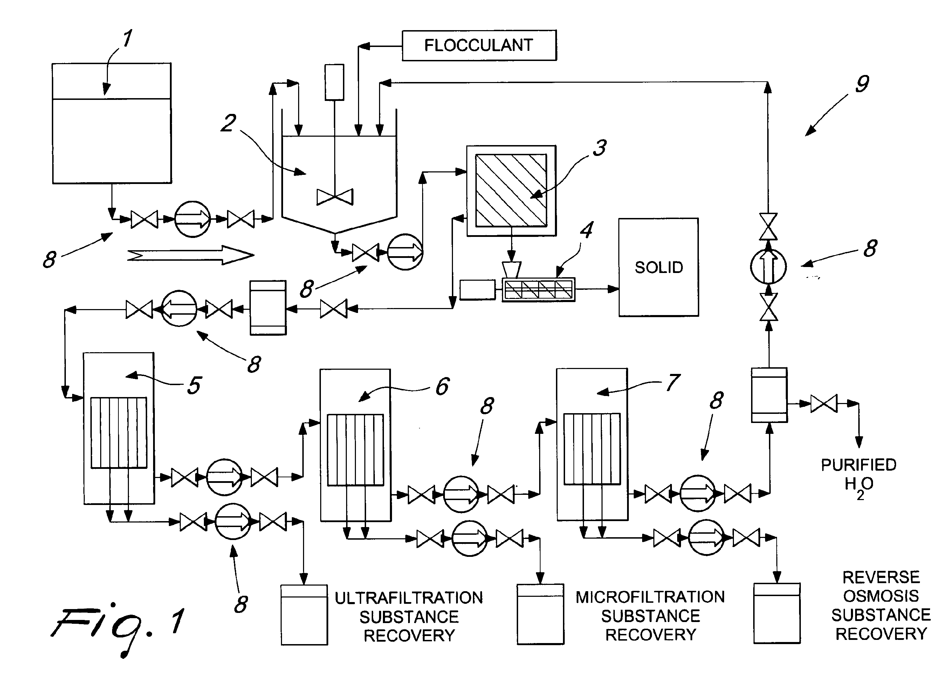

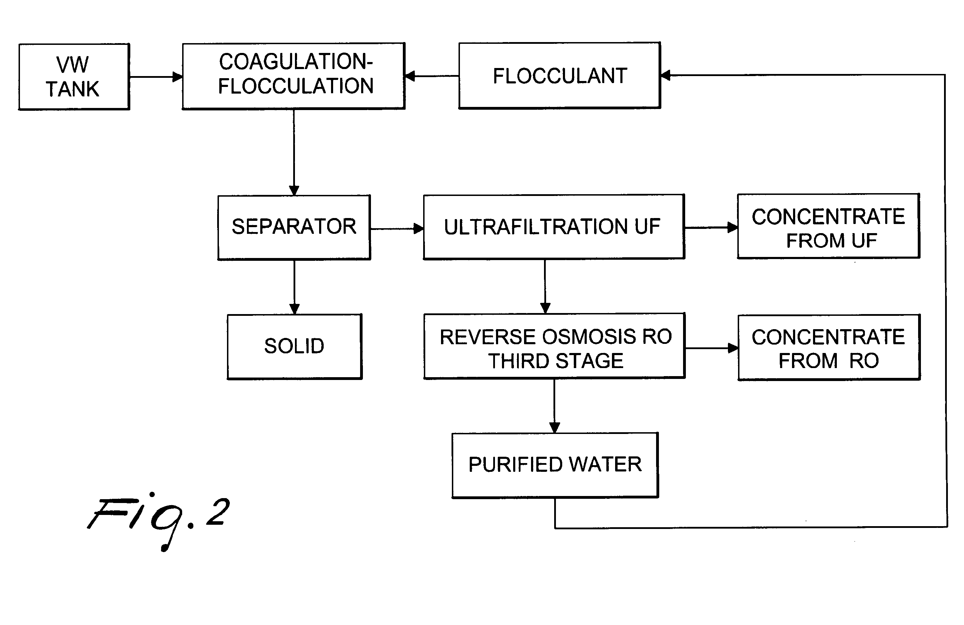

The invention is described by way of example with reference to Figures 1 and 2, which illustrate respectively:
- a block diagram of a possible apparatus for performing a particular embodiment of the method described above, in which the treated wastewater is constituted by VW, the coagulation-flocculation composition is in the form of an aqueous dispersion, and the pure water obtained at the end of the treatment is reused to prepare the aqueous dispersion: and
- a block diagram of the steps of the method performed with the apparatus of Figure 1.

In Figure 1:
- the element 1 is a container for collecting and storing VW;
- the element 2 is a mixer where the VW is placed in contact with the synergistic coagulation-flocculation composition according to the invention and in which coagulation-flocculation occurs;
- the element 3 is a centrifuge in which the solid-liquid components are separated;
- the element 4 represents means for compressing and/or drying the solid component separated by the element 3;
- the elements 5, 6 and 7 are three membrane separators, which are characterized by progressive cut-offs and in which the element 7 operates by reverse osmosis, from which three liquid fractions with decreasing molecular weight and pure water with low COD, partly recycled in the method, are recovered;
- the elements 8 are means used conventionally to connect the various components of the apparatus, such as valves, taps, pumps and pipes,
- the element 9 is a means used conventionally to provide recirculation of the recovered pure water.

The term "wastewater" designates an aqueous liquid waste originating from the industrial activities, which typically contains organic and/or inorganic substances in solution and in suspension at a higher concentration than allowed by currently applicable statutory provisions for introducing said waste in surface water bodies (such as for example rivers, lakes, ponds, the sea) or in deep ones.

In particular, the wastewater according to the invention is preferably constituted by aqueous suspensions originating from industrial processes in which the aqueous phase contains, even in solution, organic molecules such as one or more among amino acids, sugars, polyphenols, tannins and complex organic molecules in general, depending on the particular industrial process originating them, and in which the size of the suspended solids covers a broad range, from micellar substances to colloids to macroscopic particles.

The wastewater that can be treated according to the invention originates from the agroalimentary industry in general and is, in particular, VW produced by oil mills, aqueous suspensions originating from wineries (for example musts), aqueous suspensions originating from plants for processing and converting horticultural products, aqueous suspensions originating from dairies (for example whey).

If the wastewater is a VW, a typical composition is as follows:

| Value | | Minimum | Medium | Maximum |
|---|---|---|---|---|
| BOD | g/l | 19.2 | 90.2 | 134.8 |
| COD | g/l | 54.1 | 208 | 318 |
| Organic substances | % | 7.22 | 12.0 | 18.3 |
| Nitrogenous substances | % | 1.2 | 1.8 | 2.4 |
| Sugars | % | 2.0 | 4.5 | 8.0 |
| Polyphenols | % | 1.2 | 1.7 | 2.4 |
| Mucilages | % | 1.3 | 1.5 | 1.7 |
| Total solids | % | 8.3 | 13.6 | 20.15 |

As mentioned, the agroalimentary wastewater, by way of its natural origin, contains in solution many organic substances of commercial interest. These substances might be eliminated from the wastewater selectively, depending on their molecular weight (MW) by means of molecular filtration techniques (ultrafiltration, microfiltration, reverse osmosis). However, the execution of these techniques is based on membranes, the pores whereof would however be clogged rapidly by the suspended solids if they were not removed beforehand. Surprisingly, it has been found that the use of a synergistic composition as described here leads to elimination, with coagulation-flocculation, of the suspended solids but not also to the coprecipitation of the organic molecules in solution, which therefore can be recovered selectively with high purity by molecular filtration.

The expression "oil-derived products" is used to reference preferably vegetable water originating from the production of olive oil.

The expression "trigger coagulation-flocculation of the wastewater" is to the wastewater determines first of all the flocculation of the solids suspended therein and the possible aggregation of the resulting flocs. Therefore, the flocculated substances would tend to sediment naturally, although in a highly preferred embodiment of the invention, sedimentation is accelerated and optimized with assisted techniques, for example by centrifuging. As sedimentation progresses, the wastewater thus separates into two phases: a solid phase, which contains the previously suspended solids, and a liquid phase, which has indeed undergone coagulation, generally lies above the solid mass, and contains the solutes that have not coprecipitated together with the suspended solids.

The expression "suspended solids" designates the particles in suspension in the aqueous phase of the wastewater that would sediment naturally too slowly or would not sediment at all and would in any case affect negatively subsequent molecular filtration phases. The factors that hinder sedimentation may be various, such as the presence of surface charges of the same sign, high chemical-physical affinity (polarity) with water molecules, and the small size or the unsuitable ratio between size and density. Typically, by eliminating the suspended solids the invention allows to remove from the wastewater a fraction that corresponds to a percentage ranging from 30% to 60%, preferably from 30% to 50% by weight, of all the substances that are present initially (both in suspension and in solution).

The acronym "COD" references chemical oxygen demand, a parameter which indicates the total oxygen demand of a wastewater.

The acronym "BOD₅" references the biochemical oxygen demand, a parameter which indicates the oxygen demand of a wastewater in order to oxidize the degradable organic substances that are present therein, on the part of aerobic microorganisms.

In a first aspect, the invention relates to a method for the disposal of wastewater originating from the processing and/or treatment of agroalimentary products, preferably one or more among oil products, wine products, horticultural products and dairy products, more preferably oil products, by placing the wastewater in contact with a synergistic composition which comprises at least one clay, preferably bentonite, more preferably food-grade bentonite, and at least one polyelectrolyte.

The synergistic composition described here triggers coagulation-flocculation of the suspended substances more rapidly and effectively (completely and efficiently) than known solutions, thus facilitating their flocculation and sedimentation (either natural or assisted) as well as the coagulation of the remaining liquid. Differently from known methods, the present invention allows to remove from a wastewater all the suspended solids that have a molecular weight of more than 2000 daltons without causing coprecipitation of the solutes.

The solid substances eliminated with coagulation-flocculation in the case of VW typically comprise proteins, polysaccharides, cellulose and fiber, whereas in the case of dairy wastewater they contain proteins, lactose and fats. These substances can then be used as recycled raw material in the production of animal fodder, since they are rich in nitrogenous components but have no toxicity, since the components of the coagulating-flocculating composition are entirely non-toxic.

The clear solution obtained with coagulation-flocculation in the case of VW contains organic and/or inorganic substances in solution, such as mineral salts, sugars, alcohols, polyphenols, flavonoids, which can subsequently be recovered with suitable molecular filtration systems, described hereinafter. The molecular weight of these substances can vary over a wide range, from less than 2000 daltons to values far higher than 20,000 daltons.

In an advantageous embodiment, the method according to the invention comprises the following steps, to be performed in the order in which they are presented here:
a) placing at least one wastewater to be disposed of in contact with the coagulating-flocculating composition according to the invention, so as to trigger coagulation-flocculation of the wastewater and form a solid component and a liquid component,
b) separating the solid-liquid components of the flocculated wastewater of step a), preferably by means of one or more steps of decantation, filtration, centrifugation, more preferably by means of at least centrifugation, so as to obtain a solid mass and liquid,
b1) optionally drying the solid mass obtained from step b), so as to convert it into a solid which can be used in the fodder sector,
c) separating, depending on their molecular weight, the different substances that are contained in solution in the liquid obtained in b), by means of one or more molecular filtration techniques preferably selected among ultrafiltration, microfiltration, reverse osmosis, more preferably all three methods, to be performed in the order in which they are presented here.

The combination of steps a) and b) entails an advantage with respect to conventional methods, in which coagulation-flocculation and subsequent separation of the sludge (solid mass of step a)) occur in longer times and by means of a greater number of steps. From step c) it is possible to obtain purified water with a low COD (i.e., a COD within the limits set for potable water, which is typically less than 160 mg/l) and a second liquid, in one or more portions which can be characterized depending on the MW of the substances contained therein, in which the mineral salts and the different substances contained in solution in the liquid obtained in step b) have been concentrated.

In summary, by performing steps a)-c), the following types of products are therefore recovered:
- from steps a) and b): a sludge (solid mass) which contains the solid substances initially suspended in the waste. The sludge, which in the case of VW generally comprises proteins, polysaccharides, cellulose and fiber, can be used for example in the preparation of fodder additives;
- from step c): one or more liquid concentrates, which contain natural substances having a variable molecular weight, for example alcohols, sugars, polyphenols and mineral salts, preserved initially from coprecipitation during coagulation-flocculation and then selected finely and segregated into the different concentrates depending on their molecular weight. These substances can be used as recycled raw material in the context of the chemical-pharmaceutical, cosmetic and food industry, optionally after further purification. Moreover, if reverse osmosis is used specifically, purified water with a low COD is obtained which can be used for irrigation, recycled to the production process or returned without limitations to the natural hydrogeologic cycle.

The recovery of clean water (pure water, i.e., water within the limits defined by currently applicable statutory provisions for being classified as potable) is particularly advantageous if it is reused in the same industrial process from which the wastewater derives. For example, it can be used to extract olive oil, whose production areas historically have scarce water supplies. Clean water can also be reused in the context of the method according to the invention, for example to prepare the aqueous suspension of clay (see Figure 2).

After triggering coagulation-flocculation in step a), it can be advantageous to leave the wastewater in contact with the composition according to the invention until the flocs that have formed aggregate and their spontaneous precipitation occurs, of course in the case in which their size allows this. The necessary contact time can be assessed simply by the average person skilled in the art by resorting to ordinary common knowledge.

In another embodiment, the method according to the invention comprises a step a1), which prepares for step a), in which the at least one wastewater that is to be disposed of is stored appropriately so as to prevent its putrefaction/going rancid due to the contamination of microorganisms that are present in the environment.

In one embodiment, step a1) comprises storing the at least one wastewater out of contact with air, for example by storing it in suitable tanks or containers in which the freshly produced wastewater remains while waiting for treatment.

In one embodiment, step a1) comprises ensuring absence of contact with air by using a suitable hermetic closure of the containers and preferably by also causing the flow, within the collection containers, of an inert gas, for example nitrogen, in slight overpressure with respect to the atmospheric pressure. In this manner, penetration of air and of particulate is prevented, substantially eliminating contamination caused by molds, yeasts and bacteria.

Performing step a1) is particularly advantageous for example in cases in which the wastewater contains organic substances, which are an easy substrate for microbial growth and proliferation. For example, freshly produced VW is substantially free from microorganisms, pathogenic viruses and toxic or polluting organic substances. However, this situation persists only for a short period of time, since the conventional storage of VW occurs in open tanks, in contact with air, which are often not very clean. In such conditions, spontaneous processes of microbiological fermentation are rapidly triggered which make the waste become rancid. Performing step a1) is therefore particularly advantageous when the at least one wastewater is not or cannot be treated immediately, for example in the case of cooperative plants dedicated to the disposal of waste produced by oil mills.

Another situation in which it is advantageous to perform step a1) is when the production is highly seasonal (VW and musts). If a process for disposing of wastewater simultaneously with its production is to be used, one would need the availability of a compact in-line plant which, however, would operate only to a limited extent of its potential. By providing step a1) it is instead possible to use a larger cooperative plant, keeping it active throughout the year, with an evident saving on production and treatment costs.

A method according to the invention without step a1) might instead be more advantageous if waste disposal were performed directly on-site by the oil mill, as an in-line process with respect to oil production.

It has been found that the liquid that arrives from step b) has a very low residual turbidity and is practically free from suspended solids, and therefore it is adapted to be treated in step c) with a molecular filtration process on a membrane of a conventional type, such as one or more among ultrafiltration, microfiltration, reverse osmosis, and preferably all three. In order to prevent the pores, over time, from being clogged by non-permeating substances, it is advantageous to pressurize the fluid to be treated and send it to the surface of the separator tangentially (tangential filtration) at such a speed as to produce permeation effectively but also remove continuously the layer of substances that the stream of liquid tends to deposit on the surface of the separator. By proceeding in this manner it is possible to perform separation efficiently and extend the working life of the separator.

In the embodiment in which at least one molecular filtration step is provided, two fluids are recovered (optionally after combining the individual permeates if multiple identical separators are present), the first fluid (recovered fraction) contains the substances whose dimensions are large enough to be stopped by the microfiltration, ultrafiltration or osmosis membranes, whereas the second fluid (permeate) contains the substances that are small enough to pass through the separators. The volume ratio between the two fluids can be made to range according to the requirements from approximately 99 permeate/1 recovered fraction to approximately 90 permeate/10 recovered fraction by selecting the cut-off of the membranes. The permeate can be used without further treatments for example for fertilizing irrigation, since it has a total content of substances generally lower than 0.5 g/l. The separated fraction can instead be used for example as recycled raw material to produce additives for fodders or to recover the valuable organic substances that are present therein.

If one wishes to obtain extremely clean water to be reused for example in industrial processes (such as the process for milling olives), it is advantageous to feed the permeate from microfiltration and/or ultrafiltration through one or more reverse-osmosis modules (separators) (element 7 of Figure 1). The membranes that are present in the reverse-osmosis module are crossed only by the water, which is now free from all substances, including ions. A concentrate rich in salts and substances with a very low molecular weight is thus also recovered from the osmosis process. Said concentrate can be used for example in the fodder field but also in the cosmetic or pharmacological field. In the case of VW, this concentrate is for example very rich in polyphenols.

In all the steps of the method described above, the choice of the values of parameters such as for example times, temperatures, type of equipment to be used and membrane pore size is left to the person skilled in the art, since it can be determined easily in each instance depending on the type of product and on the choices of the operator, by using general common knowledge as a basis.

In a further aspect, the invention relates to an apparatus for performing the method defined above, where said apparatus necessarily comprises means 2, such as for example at least one mixer, which are adapted to place the waste to be treated in contact with the coagulating-flocculating composition.

In a particular embodiment, the mixing means 2 comprise advantageously in parallel:
- means adapted to convey, feed and dose the components of the coagulating-flocculating composition,
- means for mixing the VW to be treated with the coagulating-flocculating composition, and
- means for moving the resulting mix.

In one embodiment, the apparatus, after the mixing means 2, also comprises means 3 for separating the solid-liquid components obtained from coagulation-flocculation. In a preferred embodiment, said means 3 are one or more among settling tanks, filters, centrifuges, preferably centrifuges, optionally followed by means 4 for compressing and/or drying the solid filtrate recovered from separation.

In a different embodiment, the apparatus, after the solid-liquid separation means 3 and optionally the compressing and/or drying means 4, also comprises liquid-liquid separation means 5-7 for separating the valuable substances depending on molecular cut-off. Said separation means 5-7 are for example at least one membrane separator, wherein each separator can operate independently on the principle of ultrafiltration 5, microfiltration 6 and reverse osmosis 7. Since ultrafiltration, microfiltration and reverse osmosis separate molecules with progressively smaller dimensions, these techniques, if present simultaneously, must be performed in the order in which they have been listed here. However, to provide osmosis it might not be necessary to also perform the first two beforehand. Each liquid-liquid separator 5-7 can use membranes with a different and progressive cut-off, so as to optimize according to size the recovery of the solid substances initially suspended in the wastewater. In the case of progressive use of ultrafiltration, microfiltration and reverse osmosis, it is possible to remove from the wastewater substances up to the macromolecular size. Advantageously, the last membrane separator is provided with means 9 suitable to allow partial or total recycling of water with low COD in the method itself (for example for preparing the synergistic coagulating-flocculating composition in the form of an aqueous suspension).

In one embodiment, the apparatus also comprises, before the mixing means 2, means 1 for storing the at least one wastewater which avoid its contact with air and with environmental biological contaminants (step a1)). Said means are, for example, one or more tanks or containers, advantageously provided with a hermetic closure, more advantageously also provided with conventional means which are adapted to maintain within said tanks or containers an overpressure of an inert gas. The wastewater is then drawn from said tanks or containers and sent, for example in batches, to the disposal treatment.

In a further aspect, the invention relates to a coagulating-flocculating composition which comprises at least one clay, preferably bentonite, and at least one polyelectrolyte. In this composition, clay and polyelectrolytes have demonstrated surprisingly a synergistic activity in causing the coagulation-flocculation of the solid substances suspended in the wastewater.

The term "polyelectrolyte" is used to reference an organic substance, generally a polymer of repeating units provided with at least one polar group. These groups dissociate in an aqueous environment, charging the polyelectrolyte. The polyelectrolytes that are useful in the invention can have free charges of the same and/or opposite sign, either positive and/or negative. Thanks to the charges that it carries, the polyelectrolyte allows to neutralize any charges of opposite sign that are present on the particles suspended in said waste, facilitating their coagulation and spontaneous or assisted separation. Examples of classes of polyelectrolytes that are useful in the invention are cationic and anionic polyelectrolytes.

The former (cationic polyelectrolytes) preferably comprise:
i) acrylic polymers and copolymers typically characterized by a molecular weight of more than 10⁶,
ii) copolymers obtained typically by condensation of primary and secondary amines with a medium-low molecular weight,
iii)mixtures thereof.

The latter (anionic polyelectrolytes) comprise copolymers and polymers having a high or medium-low molecular weight, preferably:
iv) acrylamide copolymers,
v) sodium acrylates, and
vi) mixtures thereof.

The at least one polyelectrolyte can be anionic or cationic. The combined use of at least one anionic polyelectrolyte and at least one cationic one, advantageously as defined above, is preferred.

The clay is preferably finely divided clay, optionally in the form of an aqueous dispersion. In a highly preferred embodiment, the clay is bentonite, even more preferably "food-grade" bentonite, especially if one decides to use the recovered solid fraction in the formulation of animal fodder.

In the composition according to the invention, the at least one clay can be present in a quantity ranging from 2.8 g/kg of wastewater to 17:5 g/kg of wastewater, preferably from 7 g/kg of wastewater to 14.5 g/kg of wastewater, more preferably equal to 10.7 g/kg of wastewater, while the at least one polyelectrolyte can be present in a quantity ranging from 0.14 g/kg of wastewater to 0.75 g/kg of wastewater, preferably from 0.25 g/kg of wastewater to 0.6 g/kg of wastewater, more preferably equal to 0.48 g/kg of wastewater.

In a highly preferred embodiment, both the clay and the polyelectrolyte are mixed with the wastewater in the form of aqueous dispersions. In this embodiment, for 700 g of waste it is advantageous to add approximately 150 g of an aqueous dispersion of 50 g of bentonite per liter of water and 170 g of an aqueous dispersion of 2 g of polyelectrolyte per liter of water.

The composition according to the invention does not form tars and does not contain toxic ingredients.

It has been found surprisingly that by adding to the wastewater as is the clay and one or more polyelectrolytes, a synergistic action is obtained between the two components with respect to the solid substances suspended in said wastewater; said substances consequently aggregate and form large flocs which are stable over time. These flocs can therefore be separated easily from the rest of the water as defined above. In the specific case of the treatment of VW, the recovered solids generally have a nitrogen content, expressed as the element, in the range of approximately 3.5-4% by weight on the total weight of the recovered solid, which expressed as raw protein is equivalent to approximately 22.75-26% by weight on the total weight of the recovered solid. In the specific case of the treatment of VW, there are also fructooligosaccharides in a quantity ranging approximately from 8% to 15% by weight on the total weight of the recovered solid. Both nitrogen and fructooligosaccharides are substances whose presence is advantageous in fodders.

If one decides to use the recovered solids in the formulation of fodders, the presence of clay, especially if bentonite, increases their commercial value, because this ingredient is already used conventionally as an additive in the preparation of granulated fodder as it facilitates extrusion operations and has the ability to absorb intestinal gases and any heavy metals that might be present.

As already mentioned, the use of a coagulating-flocculating composition as defined above has allowed to recover a quantity of solids ranging from 30% to 60%, preferably from 30% to 50%, by weight on the total weight of the solid substances that are present in the wastewater. In the specific case of VW, the variability of the removed percentage does not depend on aspects of the method or on variations of the characteristics of the composition but on variables that are independent thereof, such as for example the harvesting period of the olives, the type of cultivar, the machines used for milling, the harvesting area, and the weather pattern of the year. It has also been found surprisingly that the place of origin of the VW and the period of its production causes a significant variation in its reactivity with respect to the flocculating substances. For these reasons, it is preferable to add at least two polyelectrolytes, i.e., at least one cationic one and at least one anionic one, as defined above. The tests conducted on various types of VW have confirmed in any case that the use of a synergistic composition of at least one clay and at least one polyelectrolyte allows to separate an aqueous phase which is substantially free from suspended solid substances and from substances which are reactive with respect to clay. Substances that are reactive with respect to clay are defined as substances that are present in industrial wastewater and interact with said clay by bonding chemically or by being absorbed into the micropores that are present in clay. Examples of these substances are proteins, fibers and mucilages.

In all of its aspects, the invention has allowed surprisingly to solve innovatively and radically the problem of the coagulation-flocculation of aqueous waste suspensions originating from industrial treatments of agroalimentary products, since it does not produce liquid, solid or gaseous effluents that can be classified as toxic-noxious, it allows to recover substances having a commercial value which are currently lost during the process of flocculation and subsequent separation, it allows to recover clean water, it reduces the costs of conventional disposal systems without causing the formation of tars or deposits, and it eliminates the costs for regenerating the membranes to be used in molecular filtration.

All the described steps can be performed at ambient temperature and the separations of the substances do not entail phase variations, and therefore the energy consumption of the process is very low.

Other characteristics and advantages of the present invention will become better apparent from the description of the following preferred embodiments, intended exclusively by way of non-limiting example.

### Example 1

A sample of 1500 liters of vegetable water with a total solid content of 75 g per liter, originating from an oil mill located in the Campania region and obtained from olives milled in November, was mixed with 240 liters of a 5% by weight aqueous suspension of bentonite. The suspension was kept under agitation for 5 minutes and then received the addition of 400 liters of an 0.2% by weight solution of high-charge cationic flocculant. A suspension of flocs was formed, and the flocs tended to settle on the bottom. The flocs were separated by filtration and the moist solid was dried in vacuum, obtaining a dry residue of 69.550 kg, constituted by a part of the solids that were present in the vegetable water, by the bentonite and by the flocculant. After subtracting the masses of the additives, the solids recovered from the vegetable water amounted to 57.150 kg, which were 50.80% of the total solids present initially, equal to 112.500 kg.

The water recovered after separation by filtration of the flocs was 1200 liters.

Half was subjected to microfiltration: 600 liters were made to pass through a pack of tubular membranes with a total exchange surface of 0.9 m².

The molecular cut-off of the membranes was 20,000 daltons, the input flow rate of the liquid in the membrane pack was 600 1/h with a constant pressure of 12 bars and a temperature of 28°C, with the following results (after 60 minutes):

| | |
|---|---|
| First concentrate: | MW > 20,000 daltons - 31.5 liters |
| First permeate: | MW < 20,000 daltons -568.5 liters |

Temperature of the liquids in output from the membranes: 45°C.

The concentrate had the appearance of a concentrated dense light coffee-colored clear liquid containing 2% by weight of the total solids initially present in the vegetable water.

The liquid from recirculation was subjected to ultrafiltration. 568.5 liters were passed through a pack of tubular membranes with a total exchange surface of 0.9 m².

The molecular cut-off of the membranes was 2000 daltons and the input flow-rate of the liquid in the membrane pack was 600 1/h with a constant pressure of 30 bars and a temperature of 28°C, with the following results (after 60 minutes):

| | |
|---|---|
| Second concentrate: | 2000 daltons > MW > 20,000 daltons - 85.5 liters |
| Second permeate: | MW < 2000 daltons - 483 liters |

Temperature of the liquids in output from the membranes: 48°C.

A faintly straw yellow clear liquid permeate and a concentrated viscous dark coffee-colored solution containing 7% by weight of the total solids initially present in the vegetable water were obtained.

The clear permeate recovered from the ultrafiltration process was sent to a reverse osmosis module with the following results (after 60 minutes):

| | |
|---|---|
| Third concentrate: | salts and molecules with MW < 2000 - 193.65 liters |
| Third permeate: | pure water - 299.35 liters, which is 59.5% of the total water contained initially in the wastewater. |

Temperature of the liquids in output from the membranes: 48°C.

### Example 2

A sample of 1500 liters of vegetable water with a total solids content of 35 g/l, originating from an oil mill located in the Campania region, obtained from olives milled in November, was mixed with 300 liters of a 5% by weight aqueous suspension of bentonite. The suspension was kept under agitation for 5 minutes and subsequently received the addition of 90 liters of a 0.2% by weight solution of high-charge anionic flocculant. A suspension of flocs is formed and said flocs tend to settle on the bottom. The flocs were separated by filtration and the moist solid was dried in vacuum, obtaining a dry residue of 46.60 kg constituted by a portion of the solids present in the vegetable water, by the bentonite and by the flocculant. After subtracting the masses of the additives, the solids recovered from the vegetable water amounted to 31.50 kg, which is 60.0% of the total solids present initially, equal to 52.500 kg.

The recovered water separated from the flocs by filtration was 1400 liters.

Half was subjected to microfiltration: 700 liters were made to pass through a pack of tubular membranes with a total exchange surface of 0.9 m².

The molecular cut-off of the membranes was 20,000 daltons and the input flow-rate of the liquid in the membrane pack was 600 1/h with a constant pressure of 12 bars and a temperature of 28°C, with the following results (after 60 minutes):

| | |
|---|---|
| First concentrate: | MW > 20,000 daltons - 42 liters |
| First permeate: | MW < 20,000 daltons - 658 liters |

Temperature of the liquids in output from the membranes: 43°C.

The concentrate had the appearance of a concentrated dense clear light coffee-colored liquid, containing 1.9% by weight of the total solids present initially in the vegetable water.

The permeate was subjected to ultrafiltration. 658 liters were passed through a pack of tubular membranes with a total exchange surface of 0.9 m².

The molecular cut-off of the membranes was 2000 daltons and the input flow-rate of the liquid in the membrane pack was 600 1/h with a constant pressure of 30 bars and a temperature of 28°C, with the following results (after 60 minutes):

| | |
|---|---|
| Second concentrate: | 2000 daltons < MW < 20,000 daltons - 98.7 liters |
| Second permeate: | MW < 2000 daltons - 559.3 liters |

Temperature of the liquids in output from the membranes: 48°C.

A faintly straw-yellow clear recirculation liquid was obtained together with a dark coffee-colored concentrated viscous solution containing 7.3% by weight of the total solids present initially in the vegetable water.

The clear liquid recovered from the ultrafiltration process was sent to a reverse osmosis module with the following results (after 60 minutes):

| | |
|---|---|
| Third concentrate: | salts and substances with MW < 2000 - 221.25 liters |
| Third permeate: | water - 338.05 liters, which is 70% of the water contained initially. |

Temperature of the liquids in output from the membranes: 48°C.

Although only some preferred embodiments of the invention have been described in the text, the person skilled in the art will readily understand immediately that it is possible in any case to obtain other equally advantageous and preferred embodiments.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A composition particularly for triggering the coagulation-flocculation of solid substances suspended in at least one industrial wastewater originating from the processing and/or treatment of agroalimentary products, said composition comprising at least one clay and at least one polyelectrolyte.

2. The composition according to claim 1, wherein the at least one clay and the at least one polyelectrolyte are in the form of an aqueous dispersion.

3. The composition according to claim 1, wherein the at least one polyelectrolyte is selected from the group consisting of anionic polyelectrolytes, cationic polyelectrolytes, and mixtures thereof.

4. The composition according to claim 1, wherein the at least one clay is present in a quantity ranging from 2.8 g/kg of wastewater to 17.5 g/kg of wastewater, while the at least one polyelectrolyte is present in a quantity ranging from 0.14 g/kg of wastewater to 0.75 g/kg of wastewater.

5. A method for the disposal of at least one industrial wastewater originating from the processing and/or treatment of agroalimentary products, said method comprising the step of placing said at least one wastewater in contact with a composition as defined in one or more of claims 1 to 4, so as to trigger the coagulation-flocculation of the solids suspended in said at least one wastewater and determine the formation of a solid component and of a liquid component.

6. The method according to claim 5, wherein said agroalimentary products are selected among oil products, wine products, horticultural products and dairy products, preferably oil products.

7. The method according to claim 5, wherein the at least one wastewater comprises organic molecules in solution, selected among one or more of tannins, sugars, polyphenols, amino acids.

8. The method according to one or more of claims 5 to 7, comprising the steps of:
a) placing the at least one wastewater to be disposed of in contact with a coagulating-flocculating composition as defined in any of claims 1 to 4, so as to trigger the coagulation-flocculation of the solids suspended in said at least one waste and determine the formation of a solid component and of a liquid component,
b) separating the solid-liquid components of the wastewater flocculated in step a), obtaining a solid mass and a liquid,
b1) optionally drying the solid mass obtained from step b),
c) separating the substances contained in the liquid obtained in step b).

9. The method according to claim 8, wherein step c) occurs by means of at least one molecular filtration method selected among one or more of ultrafiltration, microfiltration, reverse osmosis, preferably all three methods, to be performed in the order in which they are listed here.

10. The method according to claim 9, wherein step c) comprises reverse osmosis and the method further comprises a step of reusing pure water obtained from said reverse osmosis.

11. The method according to one or more of claims 5 to 10, further comprising a step a1), to be performed before step a), of preserving the at least one wastewater be disposed of in containers adapted to avoid its contact with the outside environment while waiting for its treatment.

12. The method according to claim 11, wherein step a1) comprises the use of containers provided with hermetic closures, preferably by making an inert gas flow inside said containers in overpressure with respect to atmospheric pressure.

13. The apparatus for performing a method according to one or more of claims 5 to 12, said apparatus comprising means (2) for mixing the at least one wastewater with the coagulating-flocculating composition as defined according to one or more of claims 1 to 4.

14. The apparatus according to claim 13, further comprising, downstream of the mixing means (2), means (3) for separating a solid and a liquid in order to separate the solid-liquid components obtained with coagulation-flocculation.

15. The apparatus according to claim 14, further comprising, downstream of the separation means (3), means (5-7) for liquid-liquid separation in order to separate the liquid component recovered by the separation means (3) into one or more liquids that differ from each other in terms of the molecular weight of the substances contained therein.

16. The apparatus according to claim 15, wherein the means (5-7) comprise at least one membrane separator for molecular filtration, selected among one or more of ultrafiltration separators (5), microfiltration separators (6), and reverse osmosis separators (7).

17. The apparatus according to claim 16, comprising at least one reverse osmosis separator (7) and further comprising, downstream of the separator (7), means (9) to allow the partial or total recycling, in said apparatus, of water having a low COD obtained in output from said separator (7).

18. The apparatus according to claim 13, further comprising, upstream of the mixing means (2), means (1) for storing the at least one wastewater protected from contact with the outside environment.

19. The use of a composition as defined in one or more of claims 1 to 4 to trigger the coagulation-flocculation of solids suspended in at least one industrial wastewater originating from the processing and/or treatment of agroalimentary products.

20. The use according to claim 19, wherein the coagulation-flocculation does not determine the coprecipitation of molecules in solution in the wastewater.

21. The use according to claim 19, wherein said agroalimentary products are selected among oil products, wine products, horticultural products and dairy products, preferably oil products.
